Europäisches Patentamt

European Patent Office

Office européen des brevets

(19)

(11) Veröffentlichungsnummer: **0 199 089 B1**

(12) **EUROPÄISCHE PATENTSCHRIFT**

(45) Veröffentlichungstag der Patentschrift: **24.07.91**

(51) Int. Cl.5: **C07F 5/06**

(21) Anmeldenummer: **86103747.1**

(22) Anmeldetag: **19.03.86**

(54) Neue Alkalimetallaluminiumdialkyldihydride und deren Lösungen in aromatischen Kohlenwasserstoffen.

(30) Priorität: **20.04.85 DE 3514410**

(43) Veröffentlichungstag der Anmeldung:
**29.10.86 Patentblatt 86/44**

(45) Bekanntmachung des Hinweises auf die
Patenterteilung:
**24.07.91 Patentblatt 91/30**

(84) Benannte Vertragsstaaten:
**BE DE FR GB IT**

(56) Entgegenhaltungen:
**EP-A- 0 181 706**
**US-A- 2 915 541**
**US-A- 3 060 216**

(73) Patentinhaber: **SCHERING AKTIENGESELL-**
**SCHAFT Berlin und Bergkamen**
**Ernst-Schering-Strasse 14 Postfach 15 40**
**W-4709 Bergkamen(DE)**

(72) Erfinder: **Schrader, Rolf, Dr. Dipl.-Chem.**
**Dresdner Strasse 29**
**W-4750 Unna(DE)**
Erfinder: **Schröer, Ulrich, Dr. Dipl.-Chem.**
**Robert-Koch-Strasse 67 b**
**W-4708 Kamen-Methler(DE)**

EP 0 199 089 B1

## Beschreibung

Die vorliegende Erfindung betrifft neue Alkalimetallaluminiumdialkyldihydride und deren Lösungen in aromatischen Kohlenwasserstoffen.

Aklkalimetallaluminiumdialkyldihydride, insbesondere das Natriumaluminiumdiäthyldihydrid, sind bekannte Reduktionsmittel und finden als solche industrielle Verwendung, insbesondere zur Reduktion von Carbonylgruppen.

Ungünstigerweise haben diese bekannten Verbindungen, die zwei gleiche Alkylgruppen enthalten, wie etwa das Natriumaluminiumdiäthyldihydrid, schlechte Löslichkeitseigenschaften in paraffinischen Lösungsmitteln, während mit aromatischen Kohlenwasserstoffen, insbesondere Alkylbenzolen, stabile, jedoch relativ verdünnte Lösungen von etwa 20 Gew.% hergestellt werden können.

Wünschenswert wäre jedoch eine höhere Löslichkeit in den zuvor genannten Medien, mit der auch ein größeres Reduktionsvermögen pro Mengeneinheit verbunden wäre. Schließlich darf nicht unberücksichtigt bleiben, daß unter wirtschaftlichen Aspekten in konzentrierten Lösungen entsprechend hohe Anteile Reduktionsmittel transportiert werden können.

Das wurde beispielsweise versucht durch Zugabe von Tetrahydrofuran (DE-AS 21 51 495), wobei die an sich bekannte Komplexierung durch Äthersauerstoff ausgenutzt wird.

So kann beispielsweise die Konzentration von Natriumaluminiumdiäthyldihydrid in Toluol von 16 Gew.-% durch Zugabe von 1,1 Gew.-% THF auf etwa 28 % gesteigert werden.

Überraschenderweise wurde nun gefunden, daß sich konzentrierte Lösungen erhalten lassen, indem man von Alkalimetallaluminiumdialkyldihydriden ausgeht, die zwei verschiedene Alkylgruppen im Komplex aufweisen.

Es handelt sich hierbei um Verbindungen der allgemeinen Formel

$$M[Al\,R_{2-n}R'_nH_2]\,,$$

die Gegenstand der Erfindung sind.

In der Formel bedeuten R und R' verschiedene, geradkettige oder verzweigte Alkylgruppen mit bis zu 8 C-Atomen und M ein Alkalimetall; n kann Werte zwischen 0,1 und 1,9 annehmen.

Besonders bevorzugt sind Verbindungen der Formel

$$Na[AlEt_{2-n}n\text{-}Bu_nH_2]$$
(Et = Ethyl, n-Bu = n-Butyl)

insbesondere

$$Na[AlEt_{1,6}n\text{-}Bu_{0,4}H_2]\,.$$

Gegenstand der Erfindung sind ferner stabile Lösungen der Verbindungen gemäß den Ansprüchen 1 - 3 in aromatischen Kohlenwasserstoffen.

Mit den erfindungsgemäßen Alkalimetallaluminiumdialkyldihydriden können Lösungen hergestellt werden, bei denen auch bei einer Konzentration von 60 Gew.-% in Toluol bei Raumtemperatur noch kein Niederschlag auftritt.

Entsprechend hoch ist somit auch der Gehalt an aktivem Wasserstoff, so daß die Lösungen der erfindungsgemäßen Verbindungen in aromatischen Kohlenwasserstoffen ein deutlich verbessertes Reduktionsvermögen pro Mengeneinheit aufweisen.

Als geeignete Lösungsmittel kommen im Prinzip inerte paraffische und aromatische Lösungsmittel infrage, jedoch ist bekannt, daß die Löslichkeit der reinen komplexen Hydride in paraffinischen Kohlenwasserstoffen äußert gering ist, dagegen in aromatischen Kohlenwasserstoffen, wie Benzol, recht gut. Aus Gründen der Stabilität der Lösungen werden jedoch allgemein Alkylbenzole, wie Toluol oder Xylol, als Lösungemittel bevorzugt.

Die erfindungsgemäßen Verbindungen können nach bekannten Verfahren, beispielsweise durch Umsetzung von NaH mit den entsprechenden Dialkylaluminiumhydriden, hergestellt werden. Dabei ist es auch möglich, solche Dialkylaluminiumhydride einzusetzen, die produktionsbedingt einen Anteil an Aluminiumtrialkyl aufweisen.

Setzt man zur Herstellung der Lösungen keine reinen Ausgangsmaterialien (z. B. älteres Natriumhydrid) ein, kann ein Filtrationsschritt erforderlich werden. Davon unberührt bleiben jedoch die Charakteristika der

2

Lösungen.

Beispiel 1

Na [AlEt$_{1,4}$n-Bu$_{0,6}$H$_2$]

Bei Raumtemperatur gibt man unter Rühren und Stickstoffinertisierung innerhalb von ca. 10 Minuten zu einer Suspension von 24 g Natriumhydrid in 216 g Toluol ein Gemisch aus 60,3 g Diethylaluminiumhydrid und 42,6 g Di-n-butylaluminiumhydrid. Dabei steigt die Innentemperatur, die durch den Siedepunkt des Toluols begrenzt ist, an. Man erhitzt noch zwei Stunden unter Rückfluß, läßt danach auf Raumtemperatur abkühlen und erhält so eine 37 Gew.-%ige Lösung der Komplexverbindung in Toluol mit einem Gehalt an aktivem Wasserstoff von 133 Nml$\cdot$g$^{-1}$.

Beispiel 2

Aufkonzentration von Na [AlEt$_{1,4}$n-Bu$_{0,6}$H$_2$]

Durch Verdampfen des Toluols gelangt man zu mindestens 60 Gew.-%igen Lösungen der Komplexverbindung in Toluol mit mindestens 196 Nml$\cdot$g$^{-1}$ an aktivem Wasserstoff. Es wird hier kein Niederschlag beobachtet.

Beispiel 3

Na [AlEt$_{1,7}$n-Bu$_{0,5}$H$_{1,8}$]

Bei Raumtemperatur gibt man unter Rühren und Stickstoffinertisierung innerhalb von ca. 10 Minuten zu einer Suspension von 15 g Natriumhydrid in 80 g Toluol ein Gemisch aus 32,3 g Diethylaluminiumhydrid und 17,8 g Di-n-butylaluminiumhydrid mit einem Gehalt an zusammen 17 g Triethylaluminium und Tri-n-butylaluminium. Dabei steigt die Innentemperatur auf etwa 330 K (57 °C). Man erhitzt noch zwei Stunden unter Rückfluß, läßt danach auf Raumtemperatur abkühlen und erhält so eine Lösung der Komplexverbindungen mit einem Gehalt an aktivem Wasserstoff von 173 Nml$\cdot$g$^{-1}$.

Beispiel 4

K [AlEt$_{1,5}$n-Bu$_{0,5}$H$_2$]

Bei Raumtemperatur gibt man unter Rühren und Stickstoffinertisierung innerhalb von ca. 10 Minuten zu einer Suspension von 30 g Kaliumhydrid in 170 g Xylol-Isomerengemisch ein Gemisch aus 48,5 g Diethylaluminiumhydrid und 26,7 g Di-n-butylaluminiumhydrid. Dabei steigt die Innentemperatur, die durch den Siedepunkt des Xylols begrenzt ist, an. Man erhitzt noch zwei Stunden unter Rückfluß, läßt danach auf Raumtemperatur abkühlen und erhält so eine 38 Gew.-%ige Lösung der Komplexverbindung in Xylol mit einem Gehalt an aktivem Wasserstoff von 121 Nml$\cdot$g$^{-1}$.

Beispiel 5

Li[AlEt$_{1,0}$n-Bu$_{1,0}$H$_2$]

Bei Raumtemperatur gibt man unter Rühren und Stickstoffinertisierung innerhalb von ca. 10 Minuten zu einer Suspension von 12 g Lithiumhydrid in 400 g Toluol ein Gemisch aus 64,6 g Diethylaluminiumhydrid und 106,7 g Di-n-butylaluminiumhydrid. Dabei steigt die Innentemperatur, die durch den Siedepunkt des Toluols begrenzt ist, an. Man erhitzt noch zwei Stunden unter Rückfluß, läßt danach auf Raumtemperatur abkühlen und erhält so eine 31 Gew.-%ige Lösung der Komplexverbindung in Toluol mit einem Gehalt an aktivem Wasserstoff von 114 Nml$\cdot$g$^{-1}$.

Beispiel 6

Na[alMe$_{0,3}$Et$_{1,7}$H$_2$]

Bei Raumtemperatur gibt man unter Rühren und Stickstoffinertisierung innerhalb von ca. 10 Minuten zu einer Suspension von 36 g Natriumhydrid in 300 g Xylol-Isomerengemisch ein Gemisch aus 13,1 g Dimethylaluminiumhydrid und 109,8 g Diethylaluminiumhydrid. Dabei steigt die Innentemperatur, die durch den Siedepunkt des Xylols begrenzt ist, an. Man erhitzt noch zwei Stunden unter Rückfluß, läßt danach auf Raumtemperatur abkühlen und erhält so eine 35 Gew.-%ige Lösung der Komplexverbindung in Xylol mit einem Gehalt an aktivem Wasserstoff von 148 Nml$\cdot$g$^{-1}$.

Entsprechend Beispiel 1 wurden hergestellt:

| Bei-spiel | Verbindung | Gew.-%ig in Toluol | $\frac{\text{Nml } H_2}{g}$ | Einsatzmengen in g | | | | |
|---|---|---|---|---|---|---|---|---|
| | | | | NaH | AlEt$_2$H | Ali-Bu$_2$H | Aln-Bu$_2$H | Toluol |
| 7 | Na$\left[\text{AlEt}_{1,8}\text{i-Bu}_{0,2}\text{H}_2\right]$ | 31 | 120 | 24 | 77,5 | 14,2 | – | 258 |
| 8 | Na$\left[\text{AlEt}_{1,5}\text{i-Bu}_{0,5}\text{H}_2\right]$ | 35 | 126 | 24 | 64,6 | 35,6 | – | 231 |
| 9 | Na$\left[\text{AlEt}_{1,0}\text{n-Bu}_{1,0}\text{H}_2\right]$ | 45 | 146 | 12 | 21,5 | – | 35,6 | 84 |
| 10 | Na$\left[\text{AlEt}_{0,5}\text{n-Bu}_{1,5}\text{H}_2\right]$ | 55 | 163 | 12 | 10,8 | – | 53,3 | 62 |
| 11 | Na$\left[\text{AlEt}_{0,1}\text{n-Bu}_{1,9}\text{H}_2\right]$ | 45 | 123 | 48 | 8,6 | – | 270,2 | 400 |
| 12 | Na$\left[\text{AlEt}_{1,2}\text{n-Oc}_{0,8}\text{H}_2\right]$ | 40 | 101 | 12 | 25,8 | – | Aln-Oc$_2$H 50,9 | 133 |

**Patentansprüche**

1. Alkalimetallaluminiumdialkyldihydride der allgemeinen Formel

$M[Al\ R_{2-n}R'_nH_2]$ ,

in der M ein Alkalimetall, R und R' verschiedene geradkettige oder verzweigte Alkylgruppen mit bis zu 8 C-Atomen und n Werte zwischen 0,1 und 1,9 bedeuten.

**2.** Alkalimetallaluminiumdialkyldihydride gemäß Anspruch 1 der allgemeinen Formel

$Na[AlEt_{2-n}n\text{-}Bu_nH_2]$ ,

worin Et für Ethyl und n-Bu für n-Butyl steht.

**3.** Alkalimetallaluminiumdialkyldihydrid gemäß Anspruch 2 der Formel

$Na[AlEt_{1,6}n\text{-}Bu_{0,4}H_2]$

**4.** Stabile Lösungen der Verbindungen gemäß den Ansprüchen 1 - 3 in aromatischen Kohlenwasserstoffen.

**Claims**

**1.** Alkali metal dialkylaluminium dihydrides of the general formula

$M[Al\ R_{2-n}R'_nH_2]$ ,

in which M represents an alkali metal, R and R' represent different linear or branched alkyl groups having up to 8 carbon atoms and $\underline{n}$ represents values between 0.1 and 1.9.

**2.** Alkali metal dialkylaluminium dihydrides according to claim 1 of the general formula

$Na[AlEt_{2-n}n\text{-}Bu_nH_2]$

in which Et represents ethyl and n-Bu represents n-butyl.

**3.** Alkali metal dialkylaluminium dihydride according to claim 2 of the formula

$Na[AlEt_{1,6}n\text{-}Bu_{0,4}H_2]$ .

**4.** Stable solutions of the compounds according to claims 1 to 3 in aromatic hydrocarbons.

**Revendications**

**1.** Dialkyl-dihydruro-aluminates de métaux alcalins de formule générale

$M\ [Al\ R_{2-n}R'_nH_2]$ ,

dans laquelle M désigne un métal alcalin, R et R' sont des alkyles différents linéaires ou ramifiés pouvant avoir jusqu'à 8 atomes de carbone et n est un nombre compris entre 0,1 et 1,9.

**2.** Dialkyl-dihydruro-aluminates de métaux alcalins selon la revendication 1, de formule générale

$Na[AlEt_{2-n}n\text{-}Bu_nH_2]$

Et désignant le radical éthyle et n-Bu le radical n-butyle.

**3.** Dialkyl-dihydruro-aluminate de métal alcalin selon la revendication 2, de formule

$Na[AlEt_{1,6}n\text{-}Bu_{0,4}H_2]$

4. Solutions stables des composés des revendications 1 à 3 dans des hydrocarbures aromatiques.